(19) Europäisches Patentamt
European Patent Office
Office européen des brevets

(11) **EP 3 855 088 B1**

(12) **EUROPEAN PATENT SPECIFICATION**

(45) Date of publication and mention
of the grant of the patent:
**13.11.2024 Bulletin 2024/46**

(21) Application number: **19863334.9**

(22) Date of filing: **14.06.2019**

(51) International Patent Classification (IPC):
**F24F 11/49** (2018.01)        **F24F 11/00** (2018.01)
**F24F 11/38** (2018.01)        **F24F 11/62** (2018.01)
**G05B 19/042** (2006.01)        **F24F 11/64** (2018.01)
**F24F 11/30** (2018.01)

(52) Cooperative Patent Classification (CPC):
**F24F 11/49; F24F 11/64; G05B 19/042;**
F24F 2221/32; G05B 2219/2614

(86) International application number:
**PCT/CN2019/091327**

(87) International publication number:
**WO 2020/057191 (26.03.2020 Gazette 2020/13)**

(54) **PIPELINE CORRELATION DETECTION METHOD AND APPARATUS FOR MULTI-SPLIT AIR CONDITIONER, AND AIR CONDITIONER**

VERFAHREN UND VORRICHTUNG ZUR DETEKTION DER KORRELATION VON ROHRLEITUNGEN FÜR MEHRERE SPLIT-KLIMAANLAGEN UND KLIMAANLAGE

PROCÉDÉ ET APPAREIL DE DÉTECTION DE CORRÉLATION DE CONDUITE POUR CLIMATISEUR À DIVISIONS MULTIPLES ET CLIMATISEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2018 CN 201811081087**

(43) Date of publication of application:
**28.07.2021 Bulletin 2021/30**

(73) Proprietors:
• **Qingdao Haier Air-Conditioning Electronic Co., Ltd**
**Qingdao, Shandong 266101 (CN)**
• **Haier Smart Home Co., Ltd.**
**Qingdao, Shandong 266101 (CN)**

(72) Inventors:
• **CAO, Zhigao**
**Qingdao City, Shandong 266101 (CN)**
• **AN, Chao**
**Qingdao City, Shandong 266101 (CN)**
• **WANG, Jianying**
**Qingdao City, Shandong 266101 (CN)**

(74) Representative: **Wildhack & Jellinek**
**Patentanwälte GmbH**
**Patentanwälte OG**
**Landstraßer Hauptstraße 50**
**1030 Wien (AT)**

(56) References cited:
CN-A- 102 221 658        CN-A- 108 508 803
CN-A- 108 508 803        JP-A- 2001 289 480
US-A1- 2009 049 850

## Description

### FIELD OF THE INVENTION

The present invention relates to the technical field of air conditioners, in particular to a method and device for detecting correspondences between pipelines and signal lines in a multi-connection machine, and an air conditioner.

### BACKGROUND OF THE INVENTION

When signal lines and transportation pipelines of multiple linked cooling apparatuses are being connected, there is a one-to-one correspondence between the transportation pipeline of each cooling apparatus and the signal line thereof. During the installation, technicians often have to spend a lot of time on inspecting and marking the linked cooling apparatuses so that the cooling apparatuses correspond to the signal lines in a one-to-one correspondence.

### SUMMARY OF THE INVENTION

Embodiments of the present invention provide a method and device for detecting correspondences between pipelines and signal lines in a multi-connection machine, and an air conditioner. In order to have a basic understanding of some aspects of the disclosed embodiments, a brief summary is given below. This summary is not a general comment, nor is it intended to identify critical/important elements or describe the scope of protection of these embodiments. Its sole purpose is to present some concepts in a simple form as a prelude to the detailed description that follows.

According to a first aspect of the invention, a method for detecting correspondences between pipelines and signal lines in a multi-connection machine is provided, which includes:

> sending a control signal for cooling on first signal lines of the multi-connection machine;
> detecting a temperature of each indoor unit;
> marking refrigerant pipelines of indoor units whose temperature difference reaches a preset value; and
> establishing correspondences between the marked refrigerant pipelines and the first signal lines.

In some optional embodiments, the temperature difference includes a temperature difference of the refrigerant pipeline, and/or a temperature difference of an air outlet.

According to the invention, the preset value is:

$$T_{i+1}=T_i+\alpha,$$

where Ti+i is the preset value of the $(i+1)^{th}$ signal line, $T_i$ is the preset value of the $i^{th}$ signal line, and $\alpha$ is an adjustment coefficient related to the time required for the temperature difference measured after the $i^{th}$ signal line is connected to reach the preset value; i=1,...,N; and N is the number of the signal lines.

In some optional embodiments, a value range of Ti is 3°C ~5°C.

According to the invention, the adjustment coefficient related to the time required for the temperature difference measured after the $i^{th}$ signal line is connected to reach the preset value is negatively related to time.

In some optional embodiments, when the time required for the temperature difference to reach the preset value is less than 5 minutes, $\alpha=1\sim2$; when the time required for the temperature difference to reach the preset value is greater than or equal to 5 minutes and less than 6 minutes, $\alpha=0$; and when the time required for the temperature difference to reach the preset value is greater than or equal to 6 minutes, $\alpha=-2\sim-1$.

According to a second aspect of the invention, a device for detecting correspondences between pipelines and signal lines in a multi-connection machine is provided, which includes:

> a signal sending unit, which is configured to send a control signal for cooling on first signal lines of the multi-connection machine;
> a detecting unit, which is configured to detect a temperature of each indoor unit;
> a marking unit, which is configured to mark refrigerant pipelines of indoor units whose temperature difference reaches a preset value as defined in the characterizing part of claim 5; and
> a correspondence unit, which is configured to establish correspondences between the marked refrigerant pipelines and the first signal lines.

According to a third aspect of the invention, an air conditioner is provided, which includes the device for detecting correspondences between pipelines and signal lines in a multi-connection machine according to claim 6.

The technical solutions provided by the embodiments of the present invention may include the following advantageous effects.

The method of the present disclosure detects whether the temperature change of the indoor unit reaches a preset value by sending a cooling signal in first signal lines of the multi-connection machine, thereby determining that the refrigerant pipeline of the indoor unit corresponds to the signal line, which saves the time for the technicians to inspect and confirm.

It should be understood that the above general description and the following detailed description are only exemplary and illustrative, and should not be considered as limitations to the present disclosure.

## BRIEF DESCRIPTION OF THE DRAWINGS

The drawings, which are herein incorporated into the specification and constitute a part of the specification, show embodiments in accordance with the present disclosure, and are used to explain the principle of the present disclosure together with the specification.

FIG. 1 is a first schematic flowchart of a method for detecting correspondences between pipelines and signal lines in a multi-connection machine according to an exemplary embodiment;

FIG. 2 is a second schematic flowchart of a method for detecting correspondences between pipelines and signal lines in a multi-connection machine according to an exemplary embodiment;

FIG. 3 is a third schematic flowchart of a method for detecting correspondences between pipelines and signal lines in a multi-connection machine according to an exemplary embodiment;

FIG. 4 is a fourth schematic flowchart of a method for detecting correspondences between pipelines and signal lines in a multi-connection machine according to an exemplary embodiment; and

FIG. 5 is a block diagram of a device for detecting correspondences between pipelines and signal lines in a multi-connection machine according to an exemplary embodiment.

## DETAILED DESCRIPTION OF THE EMBODIMENT(S) OF THE INVENTION

Specific embodiments of the present invention will be fully illustrated in the following description and drawings to enable those skilled in the art to carry out them. Other embodiments may include structural, logical, electrical, procedural, and other changes. The embodiments only represent possible changes. Unless explicitly required, separate components and functions are optional, and the order of operations may be changed. The scope of the embodiments of the present invention includes the entire scope of the claims, possible modifications can be made without departing from the scope of the claims.

In this document, relational terms such as first and second are only used to distinguish one entity or operation from another entity or operation, and do not require or imply any actual relationship or order among these entities or operations. Moreover, terms "include", "contain" or any other variants thereof are intended to cover non-exclusive inclusion, so that a process, method or device including a series of elements include not only those elements, but also other elements that are not explicitly listed, or elements inherent to the process, method or device. If there are no more restrictions, the element defined by the sentence "including a..." does not exclude the existence of other same elements in the process, method or device that includes the element. The various embodiments herein are described in a progressive manner. Each embodiment focuses on the differences from other embodiments, and for the same or similar parts between the various embodiments, reference may be made to each other. For the method, product and the like disclosed in the embodiments, since they correspond to the method disclosed in the embodiments, the description is relatively simple, and for related parts, reference may be made to the description of the method.

In the present disclosure, a control signal for cooling is sent on signal lines. The control signal for cooling is a signal for opening electronic expansion valves on refrigerant pipelines. When the electronic expansion valves on the refrigerant pipelines are opened, the refrigerant passes through the refrigerant pipelines.

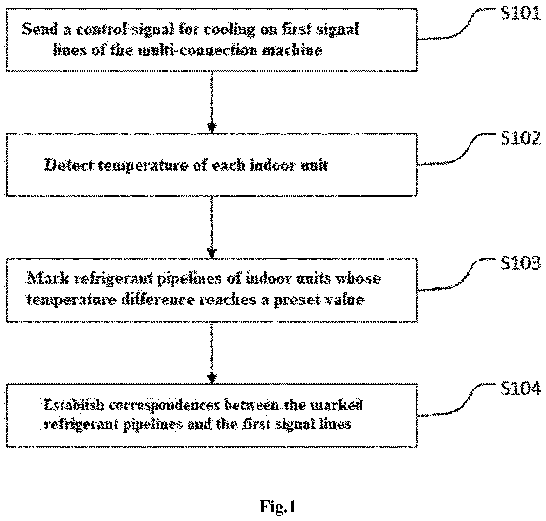

FIG. 1 is a first schematic flowchart of a method for detecting correspondences between pipelines and signal lines in a multi-connection machine according to an exemplary embodiment.

As shown in FIG. 1, the present disclosure provides a method for detecting correspondences between pipelines and signal lines in a multi-connection machine, which includes steps S101 to S104.

S 101: sending a control signal for cooling on first signal lines of the multi-connection machine.

In this embodiment, the multi-connection machine is a multi-connection air conditioner, which includes a plurality of indoor units and an outdoor unit, and each of the indoor units transmits a control signal for cooling through one signal line. Since the control of the indoor unit for cooling can cause temperature changes, the control signal for cooling can be sent.

Optionally, an execution subject of step S 101 is a control module, which is arranged in the outdoor unit, and which is configured to send the control signal on the first signal lines of the multi-connection machine.

S 102: detecting a temperature of each indoor unit.

In this embodiment, an execution subject includes temperature sensors, and the temperature sensors are arranged at positions where the temperatures of the indoor units change. The temperatures of individual indoor units are detected simultaneously. The temperature includes the temperature before the control signal is sent and the temperature after the control signal is sent.

S103: marking refrigerant pipelines of indoor units whose temperature difference reaches a preset value.

In this embodiment, a temperature difference of the detected temperatures of each indoor unit is calculated. The temperature difference is the difference between the temperature of an indoor unit before the control signal is sent and the temperature of the indoor unit after the control signal is sent. The preset value is a temperature difference set in advance. When the temperature difference of the indoor unit reaches the preset value, the refrigerant pipeline of the indoor unit is marked.

When the signal for cooling is transmitted through the signal lines, the electronic expansion valves on the refrigerant pipelines are opened to allow the refrigerant to pass through, and the temperatures of the indoor units change.

S104: establishing correspondences between the marked refrigerant pipelines and the first signal lines.

The marked refrigerant pipelines are made correspond to the first signal lines.

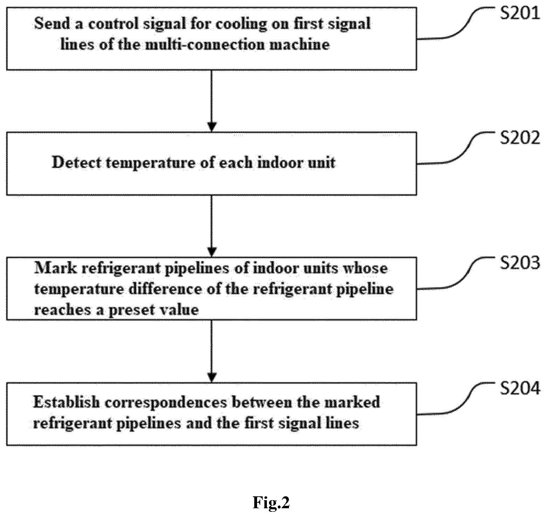

FIG. 2 is a second schematic flowchart of a method for detecting correspondences between pipelines and signal lines in a multi-connection machine according to an exemplary embodiment.

As shown in FIG. 2, in some optional embodiments, the method for detecting correspondences between pipelines and signal lines in a multi-connection machine includes steps S201 to S204.

S201: sending a control signal for cooling on first signal lines of the multi-connection machine.

S202: detecting a temperature of each indoor unit.

S203: marking refrigerant pipelines of indoor units whose temperature difference of the refrigerant pipeline reaches a preset value.

In this embodiment, the positions where the temperatures are detected are the refrigerant pipelines. When the refrigerant passes through the refrigerant pipelines, the temperatures of the refrigerant pipelines will change. Optionally, the detection devices are temperature sensors, which are arranged on the refrigerant pipelines. Optionally, the temperature sensors are arranged at positions close to the electronic expansion valves, so that the temperature changes can be detected more quickly.

S204: establishing correspondences between the marked refrigerant pipelines and the first signal lines.

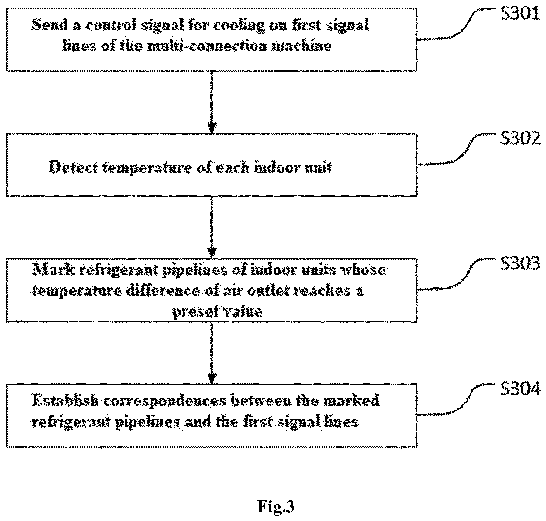

FIG. 3 is a third schematic flowchart of a method for detecting correspondences between pipelines and signal lines in a multi-connection machine according to an exemplary embodiment.

As shown in FIG. 3, in some optional embodiments, the method for detecting correspondences between pipelines and signal lines in a multi-connection machine includes steps S301 to S304.

S301: sending a control signal for cooling on first signal lines of the multi-connection machine.

S302: detecting a temperature of each indoor unit.

S303: marking refrigerant pipelines of indoor units whose temperature difference of air outlet reaches a preset value.

In this embodiment, the positions where the temperatures are detected are air outlets. When the refrigerant passes through the refrigerant pipelines and is discharged from the air outlets, the temperature changes can be detected. The detection devices are arranged at the air outlets, and the temperature differences of the air outlets are compared with a preset value; if the temperature difference reaches the preset value, the refrigerant pipeline is marked.

S304: establishing correspondences between the marked refrigerant pipelines and the first signal lines.

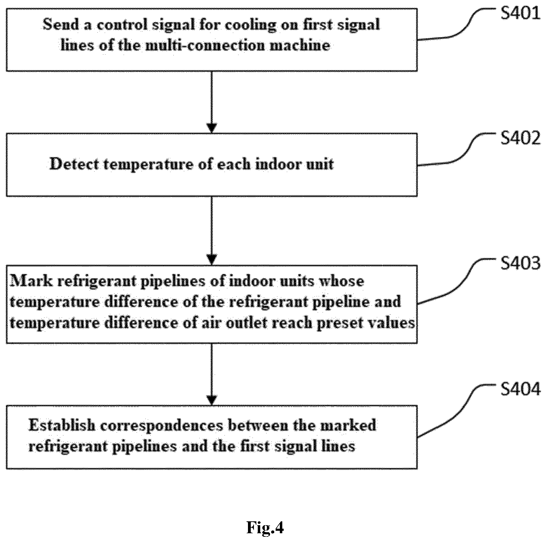

FIG. 4 is a fourth schematic flowchart of a method for detecting correspondences between pipelines and signal lines in a multi-connection machine according to an exemplary embodiment.

As shown in FIG. 4, in an embodiment of the present disclosure, the method for detecting correspondences between pipelines and signal lines in a multi-connection machine includes steps S401 to S404:

S401: sending a control signal for cooling on first signal lines of the multi-connection machine.

S402: detecting a temperature of each indoor unit.

S403: marking refrigerant pipelines of indoor units whose temperature difference of the refrigerant pipeline and temperature difference of air outlet reach preset values.

In this embodiment, the positions where the temperatures are detected are the refrigerant pipelines and the air outlets. The detection devices are arranged on the refrigerant pipelines and at the air outlets, and each of the temperature differences at the two positions is compared with a corresponding preset value respectively; if the temperature differences reach the preset values, the refrigerant pipeline is marked.

S404: establishing correspondences between the marked refrigerant pipelines and the first signal lines.

In this embodiment, the positions where the temperatures are detected include: the refrigerant pipelines and the air outlets, that is, temperature sensors are arranged on the refrigerant pipelines and at the air outlets. The temperatures at the two positions are detected separately, and the refrigerant pipelines whose temperature differences reach the preset value are marked.

The preset value is:

$$T_{i+1} = T_i + \alpha,$$

where $T_{i+1}$ is the preset value of the $(i+1)^{th}$ signal line, $T_i$ is the preset value of the $i^{th}$ signal line, and $\alpha$ is an adjustment coefficient related to the time required for the temperature difference measured after the $i^{th}$ signal line is connected to reach the preset value; $i=1,...,N$; and N is the number of the signal lines.

According to the length of time required to reach the preset value after the previous signal line sends a signal, the preset value of the next signal line is adjusted based on the adjustment coefficient, and the length of time of sending the signal is further changed, thereby reasonably adjusting the detection time.

Optionally, a value range of Ti is 3°C ~5°C.

For a signal line which is the first one that sends the signal, the preset value for detection is set to 3°C ~5°C.

The adjustment coefficient related to the time required for the temperature difference measured after the $i^{th}$ signal line is connected to reach the preset value is negatively related to time.

The longer the time for the previous signal line to reach the preset value is, the smaller the value of the adjustment coefficient will be, and the shorter the time for the previous signal line to reach the preset value is, the larger the value of the adjustment coefficient will be.

Optionally, when the time required for the temperature difference to reach the preset value is less than 5 minutes, $\alpha=1\sim2$; when the time required for the temperature difference to reach the preset value is greater than or equal to 5 minutes and less than 6 minutes, $\alpha=0$; and when the time required for the temperature difference to reach the preset value is greater than or equal to 6 minutes, $\alpha=-2\sim-1$.

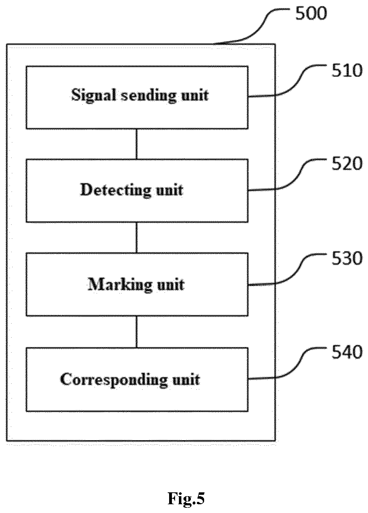

FIG. 5 is a block diagram of a device for detecting correspondences between pipelines and signal lines in a multi-connection machine according to an exemplary embodiment. As shown in FIG. 5, a second aspect of the present disclosure provides a device for detecting correspondences between pipelines and signal lines in a multi-connection machine, and the device 500 includes:

a signal sending unit 510, which is configured to send a control signal for cooling on first signal lines of the multi-connection machine;

a detecting unit 520, which is configured to detect a temperature of each indoor unit;

a marking unit 530, which is configured to mark refrigerant pipelines of indoor units whose temperature difference reaches a preset value; and

a corresponding unit 540, which is configured to establish correspondences between the marked refrigerant pipelines and the first signal lines.

In an embodiment of the present disclosure, the marking unit 530 is specifically configured to mark the refrigerant pipelines of the indoor units whose temperature difference of the refrigerant pipeline and/or temperature difference of the air outlet reaches preset values.

In this embodiment, a temperature difference of the detected temperatures of each indoor unit is calculated. The temperature difference is the difference between the temperature of an indoor unit before the control signal is sent and the temperature of the indoor unit after the control signal is sent. The preset value is a temperature difference set in advance. When the temperature difference of the indoor unit reaches the preset value, the refrigerant pipeline of the indoor unit is marked. The positions where the temperatures are detected include the refrigerant pipelines and/or the air outlets.

According to a third aspect of the present disclosure, an air conditioner is provided, which includes the aforementioned device for detecting correspondences between pipelines and signal lines in a multi-connection machine. By means of the aforementioned device, the air conditioner realizes the correspondences between the refrigerant pipelines of the indoor units and the signal lines in the multi-connection machine.

It can be recognized by those skilled in the art that the units and algorithm steps of the examples described in combination with the embodiments disclosed herein can be implemented by electronic hardware or a combination of computer software and electronic hardware. Whether these functions are executed by hardware or software depends on the specific application and design constraint conditions of the technical solution. Those skilled in the art can use a different method for each specific application to implement the described functions, but such implementation should not be considered as going beyond the scope of the present disclosure. It can be clearly understood by those skilled in the art that for the sake of the convenience and brevity of description, for the specific working process of the above-described system, device and units, reference may be made to the corresponding process in the foregoing method embodiment, and a repeated description is omitted herein.

In the embodiments disclosed herein, it should be understood that the disclosed methods and products (including but not limited to devices, apparatuses, etc.) can be implemented in other ways. For example, the device embodiments described above are only illustrative. For example, the division of the units is only a division of logical function, and there may be other divisions in actual implementation. For example, multiple units or components may be combined or integrated into another system, or some features may be ignored or not implemented. In addition, the mutual coupling or direct coupling or communication connection as illustrated or discussed may be indirect coupling or communication connection implemented through some interfaces, devices or units, and may be in electrical, mechanical or other forms. The units described as separate components may or may not be physically separated, and the components displayed as units may or may not be physical units, that is, they may be located in one place, or they may be distributed on multiple network units. Some or all of the units may be selected according to actual needs to achieve the objects of the solutions of the embodiments. In addition, the functional units in various embodiments of the present disclosure may be integrated into one processing unit, or each unit may exist alone physically, or two or more units may be integrated into one unit.

It should be understood that the flowcharts and block diagrams in the drawings show implementable system architectures, functions, and operations of the system, method and computer program product according to multiple embodiments of the present disclosure. In this regard, each block in the flowchart or block diagram may represent a module, a program segment, or part of codes, and the module, the program segment, or the part of codes contain one or more executable instructions for realizing specified logical functions. It should also be noted that in some alternative implementations, functions labelled in the blocks may also be implemented in an order different from that shown in the drawings. For example, two consecutive blocks may actually be executed substantially in parallel, or they may sometimes be executed in a reverse order, depending on the functions involved. It should also be noted that each block in the block diagram and/or flowchart, and the combination of the blocks in the block diagram and/or flowchart, may be implemented by a dedicated hardware-based system that performs specified functions or actions, or may be implemented by a combination of dedicated hardware and computer instructions. The present disclosure is not limited to the processes and structures that have been described above and shown in the drawings, and various modifications and changes can be made without departing from the scope of the present invention as defined by the appended claims.

**Claims**

1. A method for detecting correspondences between pipelines and signal lines in a multi-connection machine, comprising:

   sending (S101) a control signal for cooling on first signal lines of the multi-connection machine;
   detecting (S102) a temperature of each indoor unit; marking (S103) refrigerant pipelines of indoor units whose temperature difference reaches a preset value;
   establishing (S104) correspondences between the marked refrigerant pipelines and the first signal lines,
   **characterized in that** the preset value is:

$$T_{i+1}=T_i+\alpha,$$

   where $T_{i+1}$ is the preset value of the $(i+1)^{th}$ signal line, $T_i$ is the preset value of the $i^{th}$ signal line, and $\alpha$ is an adjustment coefficient related to the time required for the temperature difference measured after the $i^{th}$ signal line is connected to reach the preset value; i=1,...,N; and N is the number of the signal lines;
   wherein the adjustment coefficient related to the time required for the temperature difference measured after the $i^{th}$ signal line is connected to reach the preset value is negatively related to time.

2. The method according to claim 1, wherein the temperature difference comprises a temperature difference of the refrigerant pipeline, and/or a temperature difference of an air outlet.

3. The method according to claim 4, wherein a value range of $T_1$ is 3°C ~5°C.

4. The method according to claim 1, wherein when the time required for the temperature difference to reach the preset value is less than 5 minutes, $\alpha$=1~2; when the time required for the temperature difference to reach the preset value is greater than or equal to 5 minutes and less than 6 minutes, $\alpha$=0; and when the time required for the temperature difference to reach the preset value is greater than or equal to 6 minutes, $\alpha$=-2~-1.

5. A device for detecting correspondences between pipelines and signal lines in a multi-connection machine, comprising:

   a signal sending unit (510), which is configured to send a control signal for cooling on first signal lines of the multi-connection machine;
   a detecting unit (520), which is configured to detect a temperature of each indoor unit;
   a marking unit (530), which is configured to identify refrigerant pipelines of indoor units whose temperature difference reaches a preset value;
   a correspondence unit (540), which is configured to establish correspondences between the marked refrigerant pipelines and the first signal lines,
   **characterized in that** the preset value is:

$$T_{i+1}=T_i+\alpha,$$

   where $T_{i+1}$ is the preset value of the $(i+1)^{th}$ signal line, Ti is the preset value of the $i^{th}$ signal line, and $\alpha$ is an adjustment coefficient related to the time required for the temperature difference measured after the $i^{th}$ signal line is connected to reach the preset value; i=1,...,N; and N is the number of the signal lines;
   wherein the adjustment coefficient related to the time required for the temperature difference measured after the $i^{th}$ signal line is connected to reach the preset value is negatively related to time.

6. An air conditioner, comprising the device for detecting correspondences between pipelines and signal lines in a multi-connection machine according to claim 5.

**Patentansprüche**

1. Verfahren zur Erkennung von Korrespondenzen zwischen Rohrleitungen und Signalleitungen in einer Mehrfachverbindungsmaschine, das Folgendes umfasst:

   Senden (S101) eines Steuersignals zur Kühlung an den ersten Signalleitungen der Mehrfachverbindungsmaschine;
   Erfassung (S102) einer Temperatur jeder Inneneinheit;
   Kennzeichnung (S103) Kältemittelleitungen von Innengeräten, deren Temperaturunterschied einen voreingestellten Wert erreicht;
   Ermittlung (S104) Korrespondenzen zwischen den markierten Kältemittelleitungen und den ersten Signalleitungen,
   **dadurch gekennzeichnet, dass** der voreingestellte Wert ist:

$$Ti+1=Ti+\alpha,$$

   wobei Ti+1 der Voreinstellwert der (i+1)ten Signalleitung ist, Ti der Voreinstellwert der i+1-ten Signalleitung und $\alpha$ ein Einstellkoeffizient ist, der sich auf die Zeit bezieht, die für die Temperaturdifferenz gemessen wird, nachdem die I-Signalleitung angeschlossen ist, um den Voreinstellwert zu erreichen; i=1,..., N; und N ist die Anzahl der Signalleitungen;
   wobei der Einstellkoeffizient bezogen auf die Zeit, die für die Temperaturdifferenz benötigt wird, die gemessen wird, nachdem die I-Signalleitung angeschlossen ist, um den voreingestellten Wert zu erreichen, negativ auf die Zeit bezogen ist.

2. Das Verfahren gemäß Anspruch 1, bei dem die Temperaturdifferenz eine Temperaturdifferenz der Kältemittelleitung und/oder eine Temperaturdifferenz eines Luftauslasses umfasst.

3. Das Verfahren gemäß Anspruch 1, wobei ein Wertebereich von T1 3°C ~5°C ist.

4. Das Verfahren gemäß Anspruch 1, wobei die Zeit, die erforderlich ist, damit die Temperaturdifferenz den voreingestellten Wert erreicht, kleiner als 5 Minuten ist, $\alpha$=1~2; wenn die Zeit, die für die Temperaturdifferenz erforderlich ist, um den voreingestellten Wert zu erreichen, größer oder gleich fünf Minuten und weniger als 6 Minuten ist, $\alpha$=0; und wenn die Zeit, die für die Temperaturdifferenz erforderlich ist, um den voreingestellten Wert zu erreichen, größer oder gleich 6 Minuten ist, $\alpha$=-2~-1.

5. Vorrichtung zur Erkennung von Korrespondenzen zwischen Rohrleitungen und Signalleitungen in einer Mehrfachverbindungsmaschine, bestehend aus:

   eine Signalsendeeinheit (510), die so konfiguriert ist, dass ein Steuersignal zur Kühlung an den ersten Signalleitungen der Mehrfachverbindungsmaschine gesendet wird;
   eine Detektionseinheit (520), die so konfiguriert ist, dass eine Temperatur jeder Inneneinheit erfasst wird;
   eine Markierungseinheit (530), die zur Identifizierung von Kältemittelleitungen von Innengeräten konfiguriert ist, deren Temperaturdifferenz einen voreingestellten Wert erreicht;
   eine Korrespondenzeinheit (540), die konfiguriert ist, um Korrespondenzen zwischen den markierten Kältemittelleitungen und den ersten Signalleitungen herzustellen,
   **dadurch gekennzeichnet, dass** der voreingestellte Wert ist:

$$Ti+1=Ti+\alpha,$$

   wobei Ti+1 der Voreinstellwert der (i+1)ten Signalleitung ist, Ti der Voreinstellwert der i+1-ten Signalleitung und $\alpha$ ein Einstellkoeffizient ist, der sich auf die Zeit bezieht, die für die Temperaturdifferenz gemessen wird, nachdem die I-Signalleitung angeschlossen ist, um den Voreinstellwert zu erreichen; i=1,..., N; und N ist die Anzahl der Signalleitungen;
   wobei der Einstellkoeffizient bezogen auf die Zeit, die für die Temperaturdifferenz benötigt wird, die gemessen wird, nachdem die I-Signalleitung angeschlossen ist, um den voreingestellten Wert zu erreichen, negativ auf die Zeit bezogen ist.

6. Eine Klimaanlage, die die Vorrichtung zum Erkennen von Korrespondenzen zwischen Rohrleitungen und Signalleitungen in einer Mehrfachverbindungsmaschine gemäß Anspruch 5 umfasst.

**Revendications**

1. Procédé pour détecter la correspondance entre les tuyaux et les lignes de signalisation dans une machine à raccords multiples, comprenant:

   Transmission (S 101) d'un signal de commande de refroidissement sur une première ligne de signal de la machine Multi - Connexions;
   Détection (s102) de la température de chaque unité intérieure;
   Marquer (s103) la ligne de réfrigérant de l'unité intérieure dont la différence de température atteint une valeur prédéterminée;
établir une correspondance (s104) entre la conduite de réfrigérant marquée et la première ligne de signalisation,
**Caractérisé en ce que** ladite valeur prédéfinie est:

$$Ti + 1 = Ti + alpha,$$

Où Ti + 1 est la valeur de consigne de la (I + 1) ième ligne de signal, TI est la valeur de consigne de la I ième ligne de signal et $\alpha$ est le coefficient de réglage du temps nécessaire pour que la différence de température mesurée après la connexion de la I ième ligne de signal atteigne la valeur de consigne; I = 1,... N N est le nombre de lignes de signal;
Où le coefficient de réglage relatif au temps nécessaire pour que la différence de température mesurée après la connexion de la I - ème ligne de signal atteigne une valeur prédéterminée est inversement corrélé au temps.

2. Procédé selon la revendication 1, **caractérisé en ce que** la différence de température comprend la différence de température de la conduite de réfrigérant et / ou la différence de température de la sortie d'air.

3. Procédé selon la revendication 1, **caractérisé en ce que** T1 prend une valeur comprise entre 3°c et 5°C.

4. Procédé selon la revendication 1, **caractérisé en ce que** $\alpha = 1 \sim 2$ lorsque le temps nécessaire pour que la différence de température atteigne une valeur prédéterminée est inférieur à 5 minutes; $\alpha = 0$ lorsque le temps nécessaire pour que la différence de température atteigne une valeur prédéterminée est supérieur ou égal à 5 minutes et inférieur à 6 minutes; $\alpha = - 2 \sim - 1$ lorsque le temps nécessaire pour que la différence de température atteigne la valeur prédéfinie est supérieur ou égal à 6 minutes.

5. Dispositif de détection de la correspondance entre un tuyau et une ligne de signalisation dans une machine à raccords multiples, comprenant:

Une unité d'émission de signaux (510) pour émettre un signal de commande de refroidissement sur une première ligne de signal de la machine de liaison multiplex;
Une unité de détection (520) configurée pour détecter la température de chaque unité intérieure;
Une unité de marquage (530) permettant d'identifier les lignes de réfrigérant de l'appareil intérieur dont la différence de température atteint une valeur prédéterminée;
Une unité de correspondance (540) configurée pour établir une correspondance entre la conduite de réfrigérant marquée et la première ligne de signalisation,
**Caractérisé en ce que** ladite valeur prédéfinie est:

$$Ti + 1 = Ti + alpha,$$

Où Ti + 1 est la valeur de consigne de la (I + 1) ième ligne de signal, TI est la valeur de consigne de la I ième ligne de signal et $\alpha$ est le coefficient de réglage du temps nécessaire pour que la différence de température mesurée après la connexion de la I ième ligne de signal atteigne la valeur de consigne; I = 1,... N N est le nombre de lignes de signal;
Où le coefficient de réglage relatif au temps nécessaire pour que la différence de température mesurée après la connexion de la I - ème ligne de signal atteigne une valeur prédéterminée est inversement corrélé au temps.

6. Climatiseur comprenant un dispositif de détection de correspondance entre une canalisation et une ligne de signalisation dans une machine Multi - Connexions selon la revendication 5.

```
┌─────────────────────────────────────────┐        S101
│ Send a control signal for cooling on     │───┐
│ first signal lines of the multi-         │   
│ connection machine                       │
└─────────────────────────────────────────┘
                    │
                    ▼
┌─────────────────────────────────────────┐        S102
│ Detect temperature of each indoor unit   │───┐
└─────────────────────────────────────────┘
                    │
                    ▼
┌─────────────────────────────────────────┐        S103
│ Mark refrigerant pipelines of indoor     │───┐
│ units whose temperature difference       │
│ reaches a preset value                   │
└─────────────────────────────────────────┘
                    │
                    ▼
┌─────────────────────────────────────────┐        S104
│ Establish correspondences between the    │───┐
│ marked refrigerant pipelines and the     │
│ first signal lines                       │
└─────────────────────────────────────────┘
```

Fig.1

Send a control signal for cooling on first signal lines of the multi-connection machine — S201

Detect temperature of each indoor unit — S202

Mark refrigerant pipelines of indoor units whose temperature difference of the refrigerant pipeline reaches a preset value — S203

Establish correspondences between the marked refrigerant pipelines and the first signal lines — S204

**Fig.2**

```
┌────────────────────────────────────┐
│  Send a control signal for cooling on first signal  │─── S301
│      lines of the multi-connection machine          │
└────────────────────────────────────┘
                    │
                    ▼
┌────────────────────────────────────┐
│      Detect temperature of each indoor unit         │─── S302
└────────────────────────────────────┘
                    │
                    ▼
┌────────────────────────────────────┐
│  Mark refrigerant pipelines of indoor units whose   │─── S303
│   temperature difference of air outlet reaches a    │
│                  preset value                       │
└────────────────────────────────────┘
                    │
                    ▼
┌────────────────────────────────────┐
│  Establish correspondences between the marked       │─── S304
│  refrigerant pipelines and the first signal lines   │
└────────────────────────────────────┘
```

Fig.3

Send a control signal for cooling on first signal lines of the multi-connection machine — S401

Detect temperature of each indoor unit — S402

Mark refrigerant pipelines of indoor units whose temperature difference of the refrigerant pipeline and temperature difference of air outlet reach preset values — S403

Establish correspondences between the marked refrigerant pipelines and the first signal lines — S404

Fig.4

Fig.5